# EUROPÄISCHE PATENTSCHRIFT

(11) **EP 0 495 367 B1**
(45) Veröffentlichungstag und Bekanntmachung des Hinweises auf die Patenterteilung: **16.06.1999**
(21) Anmeldenummer: 92100112.9
(22) Anmeldetag: 07.01.1992
(51) Int. Cl.: C09B 62/085, D06P 1/382

(54) **Reaktivfarbstoffe**
Reactive dyes
Colorants réactifs

(30) Priorität: 17.01.1991 DE 4101177
(43) Veröffentlichungstag der Anmeldung: 22.07.1992
(73) Patentinhaber: BAYER AG, 51368 Leverkusen (DE)
(72) Erfinder: Hoppe, Manfred, Dr., W-5067 Kürten 2 (DE); Michna, Martin, Dr., W-5024 Pulheim (DE); Herd, Karl-Josef, Dr., W-5068 Odenthal-Holz (DE); Stöhr, Frank-Michael, Dr., W-5068 Odenthal (DE)

(56) Entgegenhaltungen:
- EP-A- 0 299 315
- DE-A- 1 944 818
- FR-A- 2 096 554
- FR-A- 2 319 689
- GB-A- 946 998
- GB-A- 982 479

## Beschreibung

Die vorliegende Erfindung betrifft faserreaktive Azofarbstoffe, die in Form der freien Säure folgender Formel entsprechen 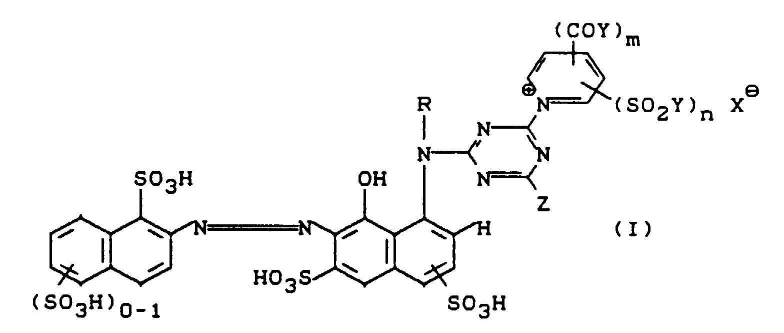 worin
- R =: H oder C₁-C₆-Alkyl, wobei die Alkylgruppen unsubstituiert oder durch OH, Halogen, SO₃H oder OSO₃H substituiert sind,
- Z =: heterocyclischer gesättigter stickstoffhaltiger Fünf- oder Sechsring, der weitere Heteroatome, wie N,O,S oder SO₂, enthalten kann und der über das N-Atom an den Triazinring gebunden ist, insbesondere ein Heterocyclus mit wenigstens zwei Heteroatomen als Ringglieder
- n, m =: 0, 1 oder 2, wobei m + n = 0,1 oder 2
- Y =: OH, OR, NR₂R₃, OMe,
- R₃, R₂ =: H, R,
wobei R₂ und R₃ zusammen mit dem N-Atom einen heterocyclischen 5- oder 6-Ring bilden können,
- Me =: Alkali- oder Erdalkalimetall, insbesondere Li, Na, K,
- X⁻ =: Anion einer ein- oder mehrbasigen organischen oder anorganischen Säure.

In einer besonders bevorzugten Ausführungsform bedeutet Z: 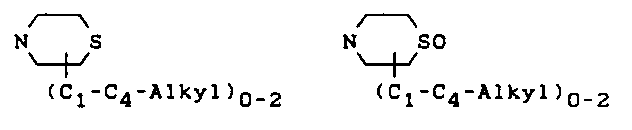 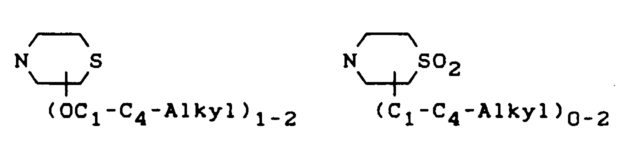 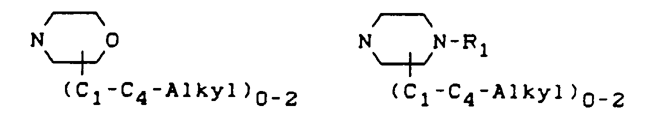 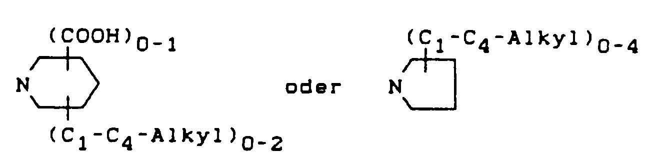 worin
- R₁ =: H oder gegebenenfalls durch wasserlöslich machende Substituenten substituiertes C₁-C₆-Alkyl.

Geeignete Substituenten für R₁ sind insbesondere OH, OSO₃H, SO₃H, COOH.

Bevorzugt sind Azofarbstoffe der Formel (Ia) 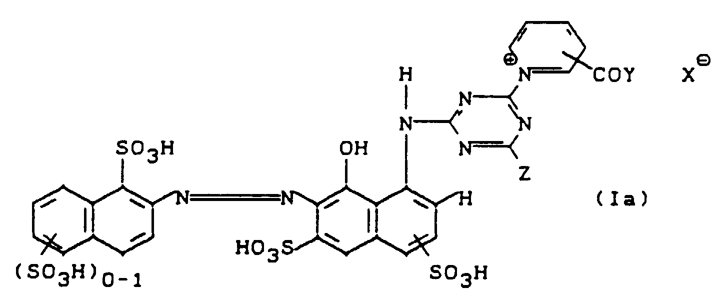 worin
- Y =: OH, OR₁, NR₂R₃, OMe, wobei
- Me =: Alkali- oder Erdalkalimetall, insbesondere Li, Na, K,
- X⁻ =: Anion einer ein- oder mehrbasigen organischen oder anorganischen Säure,
- R₃, R₂ =: H, R,
wobei R₂ und R₃ zusammen mit dem N-Atom einen heterocyclischen 5- oder 6-Ring bilden können und Z und R die oben angegebene Bedeutung haben.

Besonders bevorzugt sind Farbstoffe der Formel (Ib) 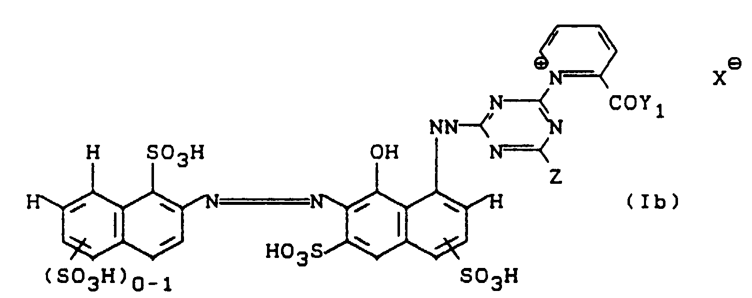 worin
- Z =: 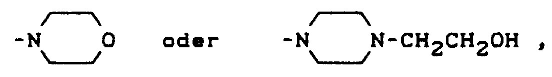
- Y₁ =: OH oder NH₂,
- X⁻ =: Anion einer ein- oder mehrbasigen organischen oder anorganischen Säure.

Ganz besonders bevorzugt sind die Farbstoffe der Formeln 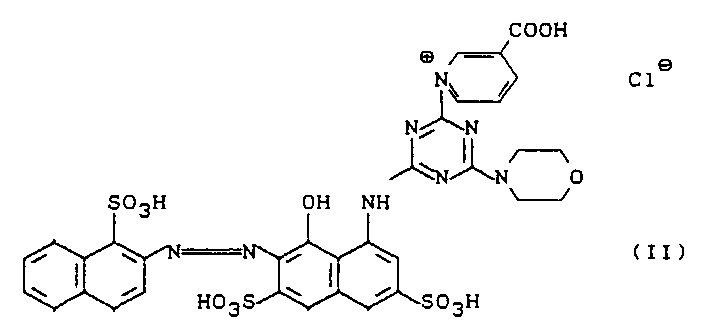 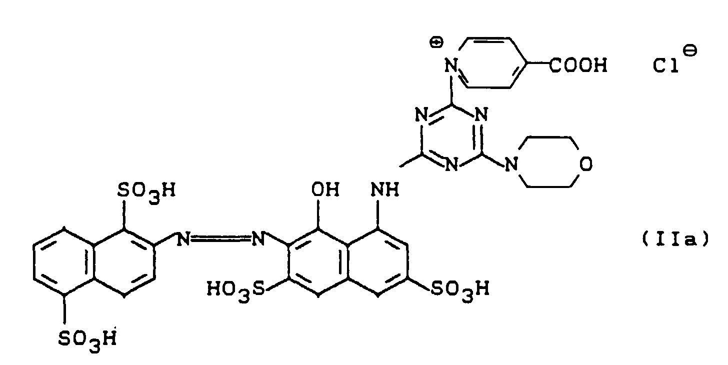 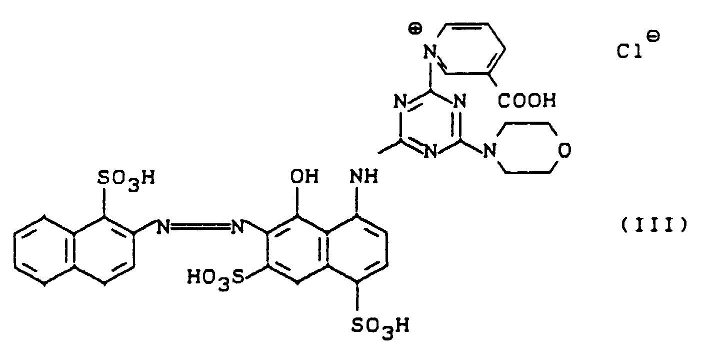 und

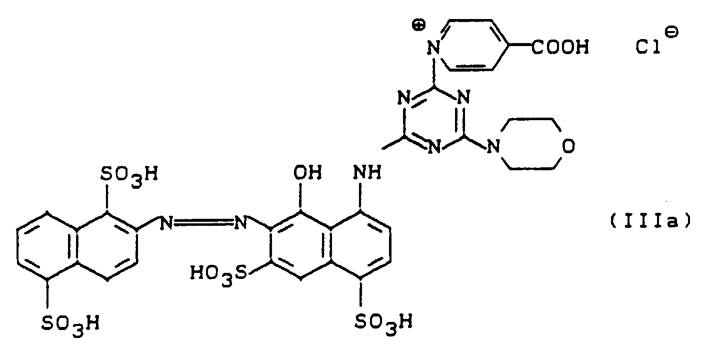

Die angegebenen Formeln sind die der freien Säuren. Bei der Herstellung werden im allgemeinen die Salze erhalten, insbesondere die Alkalisalze wie Natrium-, Kalium- oder Lithiumsalze. Die durch Quaternierung mit Pyridinen entstehende Ladung wird, in Abhängigkeit der Isolierungsbedingungen, durch ein Gegenion X^{⊖} z.B. Chlorid, Fluorid oder Sulfat ausgeglichen.

Geeignete Anionen X^{⊖} sind beispielsweise SO₃^{⊖}, HCO₃^{⊖}, Cl^{⊖}, Br^{⊖}, F^{⊖}, HSO₃^{⊖}, H₂PO₄^{⊖}, HCOO^{⊖}, HBO₂^{2⊖}.

Welche Gegenionen im Endprodukt enthalten sind, hängt davon ab, welche Ionen bei vorhergehenden Syntheseschritten mit den Reagenzien zugegeben wurden bzw. aus diesen im Verlauf der weiteren Synthese entstanden sind sowie von den Bedingungen bei eventuellen Kristallisationen und Isolierungen. Bei der Druckpermeation können sich die Mengenverhältnisse der einzelnen Ionen nochmals ändern. Außerdem können innere Salze mit Carboxylat- und Sulfonatgruppen gebildet werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Die Farbstoffe können sowohl als Feststofformulierungen wie auch als konzentrierte Lösungen eingesetzt werden.

Auf Grund ihrerer guten Löslichkeit und Stabilität sind die erfindungsgemäßen Farbstoffe besonders geeignet zur Herstellung von konzentrierten Flüssigformierungen. In einer bevorzugten Ausführungsform werden die Farbstoffe zur Reinigung einer Druckpermeation unterzogen.

Die mit diesen Farbstoffen erhältlichen Färbungen oder Drucke auf Cellulosematerialien zeichnen sich durch eine hohe Faser-Farbstoff-Bindungsstabilität sowie durch eine hervorragende Stabilität gegenüber Oxidationsmitteln wie peroxyd- oder chlorhaltige Waschmittel aus. Die Auswaschbarkeit der beim Färben oder Druck entstehenden Hydrolyseprodukte ist ausgezeichnet.

Die erfindungsgemäßen Farbstoffe sind nach den bei der Synthese von Reaktivfarbstoffen üblichen Herstellungsverfahren zugänglich.

So können beispielsweise die neuen Farbstoffe folgendermaßen hergestellt werden:
- 1. Stufe: Kondensation der Aminonaphtholdisulfonsäure mit Trifluortriazin oder Trichlortriazin (= Reaktionsprodukt A)
- 2. Stufe: Kondensation der Difluortriazinylaminonaphtholdisulfonsäure oder Dichlortriazinylaminonaphthyldisulfonsäure mit dem Amin H-Z (= Reaktionsprodukt B)
- 3. Stufe: Diazotierung der Diazokomponente und Kupplung mit Reaktionsprodukt B
- 4. Stufe: Umsetzung des Reaktionsproduktes B
in Gegenwart säurebindender Mittel mit einer Verbindung der Formel

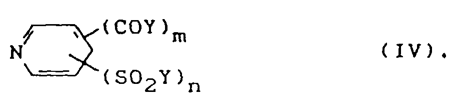

Die Umsetzung erfolgt vorzugsweise im wäßrigen oder wäßrig-organischem Medium bei Temperaturen von etwa 40 bis 140°C, vorzugsweise 60 bis 90°C bei pH-Werten von etwa 3 bis 10, vorzugsweise 6 bis 8, wenn Fluortriazine und 4-6, wenn Chlortriazine verwendet werden.

Eine weitere Möglichkeit, die Farbstoffe herzustellen, besteht darin, die Reaktionsstufen 2 und 3 zu vertauschen, d.h. man führt die Kupplung mit Reaktionsprodukt A in 2. Stufe durch und setzt erst danach mit dem Amin H-Z in 3. Stufe um.

Im Anschluß erfolgt die Kondensation mit einem Pyridinderivat der Formel (IV).

Aus DE-A 26 34 308 sind Reaktivfarbstoffe bekannt, die eine Triazinylgruppe besitzen, die einen Nicotinsäurerest aufweist.

Aus DE-A 19 44 818 und FR-A 209 6554 sind Monoazofarbstoffe bekannt, die eine Triazinylkomponente besitzen, die durch einen Morpholinrest substituiert ist.

Monoazoreaktivfarbstoffe, die im Triazinylteil durch einen Pyridylrest substituiert sind, sind bekannt aus GB-A 94 69 98.

GB-A 98 24 79 beschreibt ebenfalls Monoazoreaktivfarbstoffe, die im Triazinylteil durch einen Amino- und einen Pyridinylrest substituiert sind.

Aus EP-A-299 315 sind Monoazoreaktivfarbstoffe bekannt, deren Triazinylkomponente über eine Aminobenzoyl-Brücke mit dem Chromophoren System verbunden ist.

### Beispiel 1

31,9 g 1-Hydroxy-8-amino-naphthalin-3,6-disulfonsäure werden in 400 ml Wasser neutral gelöst. Bei 0 bis 5°C versetzt man mit 8,8 ml Trifluortriazin und hält durch Zugabe von 20 %iger Natriumcarbonatlösung einen pH-Wert von 4,0 bis 4,5. Nach 5 Minuten gibt man 9 g Morpholin hinzu und hält mit 20 %iger Natriumcarbonatlösung pH 7. Nach 15 Minuten bei 10°C ist die Reaktion beendet. Die so erhaltene Lösung der Verbindung der Formel 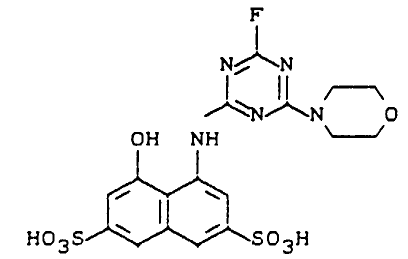 wird wie folgt weiter umgesetzt:

Zu dem erhaltenen Reaktionsprodukt wird bei 0 bis 5°C eine auf üblichem Wege hergestellte Diazoniumsalz-Suspension gegeben, die durch Diazotierung von 22,3 g 2-Aminonaphthalin-l-sulfonsäure erhalten wird. Gleichzeitig wird der pH-Wert mit 20 %iger Natriumcarbonatlösung auf 8,3 gehalten und die Kupplung zu Ende geführt. Der Farbstoff der Formel 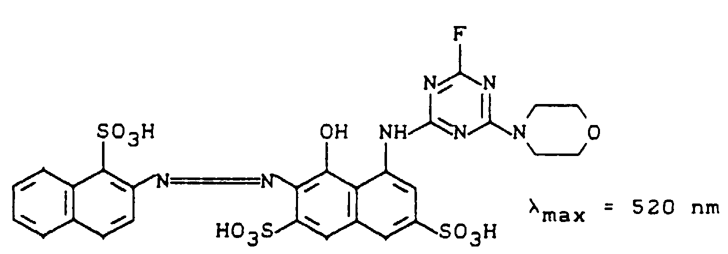 wird ausgesalzen und abgesaugt.

Die so erhaltene Paste wird in 150 ml Wasser eingetragen und man gibt 12,5 g Nicotinsäure (Pyridin-3-carbonsäure) zu. Es wird auf 80 bis 85°C erhitzt und der pH mit Sodalösung bei 7,5 gehalten. Nach 4 bis 6 h ist die Kondensation beendet und der Farbstoff der Formel 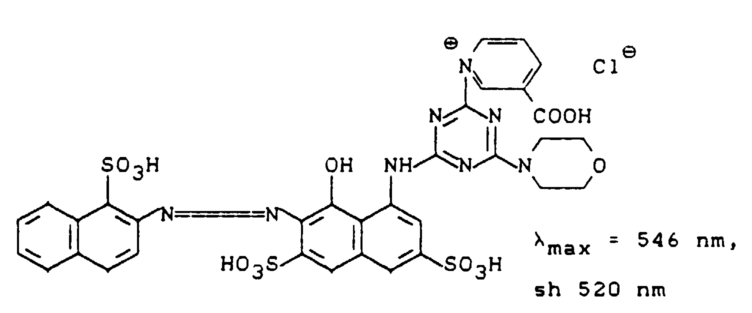 wird ausgesalzen, abgesaugt, getrocknet und gemahlen.

Eine weitere Möglichkeit den Farbstoff herzustellen besteht darin, die Reaktionsmischung der Azokupplung ohne Zwischenisolierung mit Nicotinsäure umzusetzen.

Gegebenenfalls kann das Verfahren noch weiter vereinfacht werden, indem die Reaktionslösung nach der Nicotinsäurekondensation durch aufkonzentrieren direkt zu einer Flüssigformierung weiterverarbeitet wird.

Nach einem der für Reaktivfarbstoffe üblichen Applikationsverfahren erhält man damit auf Baumwolle klare blaustichig rote Färbungen.

### Beispiel 2

Ersetzt man im Beispiel 1 die 1-Hydroxy-8-aminonaphthalin-3,6-disulfonsäure durch die äquivalente Menge an 1-Hydroxy-8-aminonaphthalin-3,5-disulfonsäure und arbeitet ansonsten wie im Beispiel 1 beschrieben, so erhält man den Farbstoff der Formel 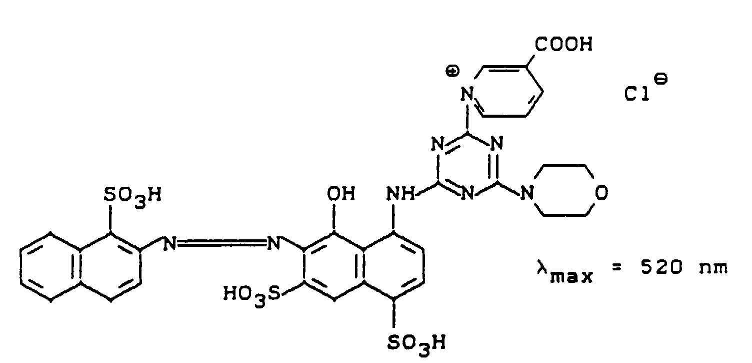 der ebenfalls nach einem für Reaktivfarbstoffe üblichen Applikationsverfahren Baumwolle in klaren blaustichig roten Tönen färbt.

Das gleiche Ergebnis wird erhalten, wenn das Trifluortriazin in Beispiel 1 ersetzt wird durch die äquivalente Menge Trichlortriazin und 1-Hydroxy-8-amino naphthalin-3,6-disulfonsäure durch die äquivalente Menge 1-Hydroxy-8-aminonaphthalin-3,5-disulfonsäure.

### Beispiel 3

Versetzt man die in Beispiel 1 hergestellte Lösung der Kupplungskomponente mit der nach üblichen Methoden hergestellten Diazotierung von 2-Amino-naphthalin-1,5-disulfonsäure und arbeitet ansonsten wie im Beispiel 1 angegeben, so erhält man den Farbstoff der Formel 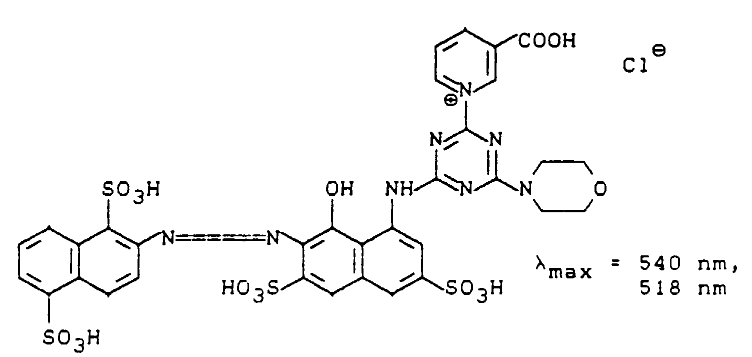 der ebenfalls nach einem für Reaktivfarbstoffe üblichen Applikationsverfahren Baumwolle in klaren blaustichig roten Tönen färbt.

### Beispiel 4

Versetzt man die in Beispiel 2 beschriebene Kupplungskomponente mit der nach üblichen Methoden hergestellten Diazotierung von 2-Amino-naphthalin-1,5-disulfonsäure und arbeitet ansonsten wie im Beispiel 2 beschrieben, so erhält man den Farbstoff der Formel 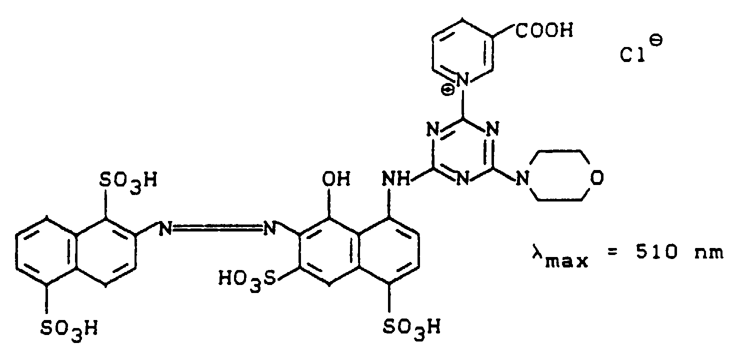 der ebenfalls nach einem für Reaktivfarbstoffe üblichen Applikationsverfahren Baumwolle in klaren blaustichig roten Tönen färbt.

### Beispiel 5

Ersetzt man in die Beispielen 1 und 2 die 2-Amino-1-naphthalinsulfonsäure durch die 2-Amino-1,6-naphthalindisulfonsäure und Nicotinsäure durch Nicotinsäureamid und arbeitet ansonsten wie in den Beispielen angegeben, erhält man die Farbstoffe der Formeln 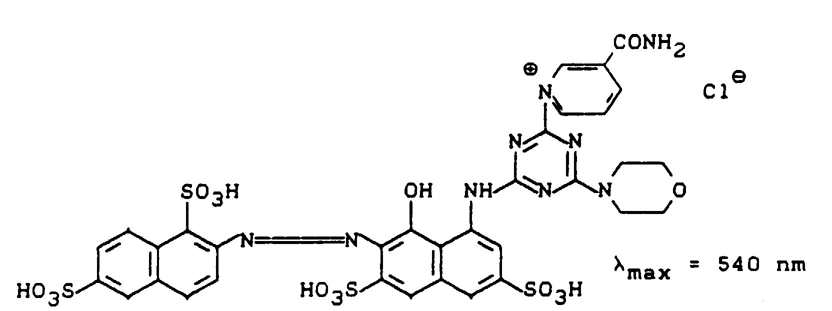 und

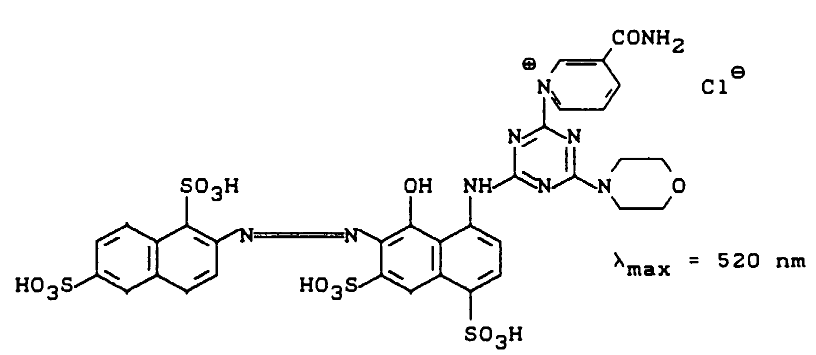

Diese Farbstoffe färben Baumwolle nach einem für Reaktivfarbstoffe üblichen Applikationsverfahren in klaren blaustichig roten Tönen.

### Beispiel 6

Ersetzt man in den Beispielen 1 und 2 das Morpholin durch entsprechende Mengen N-Hydroxyethylpiperazin und arbeitet ansonsten wie in den Beispielen angegeben, erhält man die Farbstoffe der Formeln 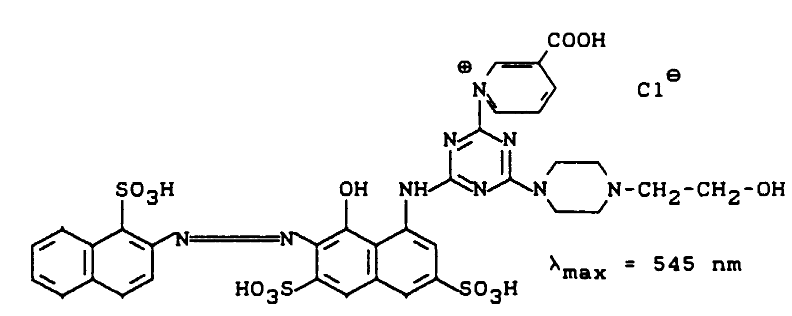 und

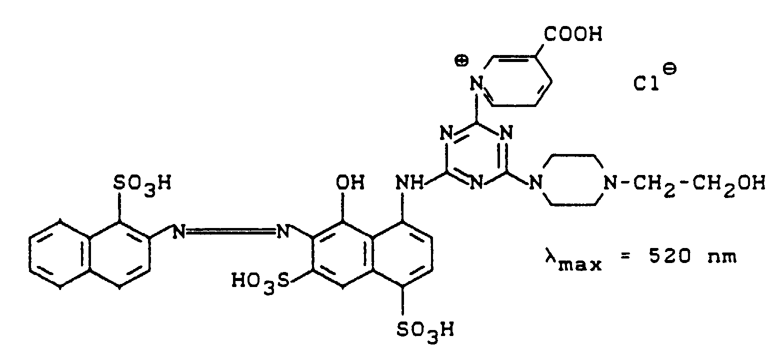

Diese Farbstoffe färben Baumwolle nach einem für Reaktivfarbstoffe üblichen Applikationsverfahren in klaren blaustichig roten Tönen.

### Beispiel 7

Ersetzt man die in Beispiel 1 verwendete Menge Nicotinsäure durch Isonicotinsäure (4-Carboxypyridin) und arbeitet ansonsten wie in Beispiel 1, so erhält man den Farbstoff der Formel

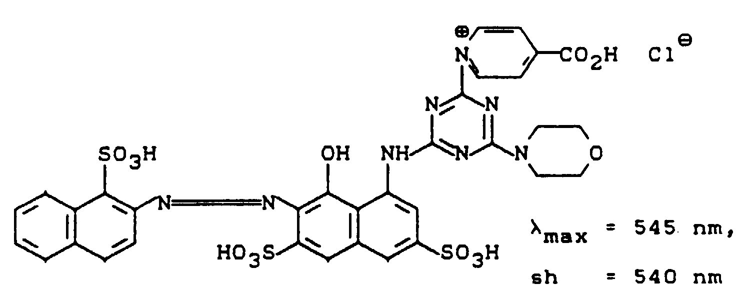

Nach einem der für Reaktivfarbstoffe üblichen Applikationsverfahren erhält man damit auf Baumwolle blaustichig rote Färbungen.

### Beispiel 8

Ersetzt man in Beispiel 1 im Nicotinsäurerest am Triazinring die Carboxylgruppe durch eine Sulfonsäuregruppe und arbeitet ansonsten wie im Beispiel 1 angegeben, so erhält man den Farbstoff der Formel 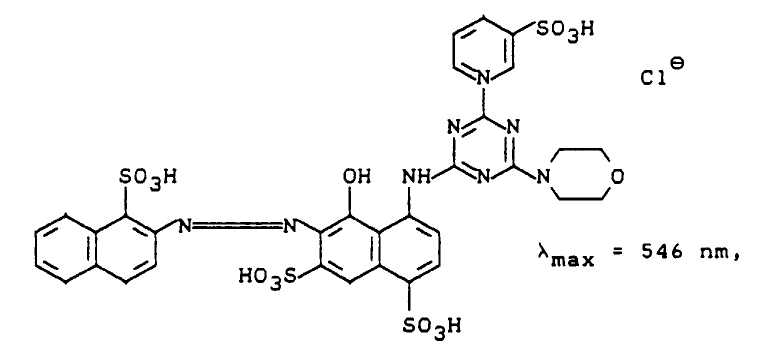 der ebenfalls nach einem für Reaktivfarbstoffe üblichen Applikationsverfahren Baumwolle in klaren blaustichig roten Tönen färbt.

## Patentansprüche

1. Faserreaktive Azofarbstoffe die in Form der freien Säure folgender Formel entsprechen 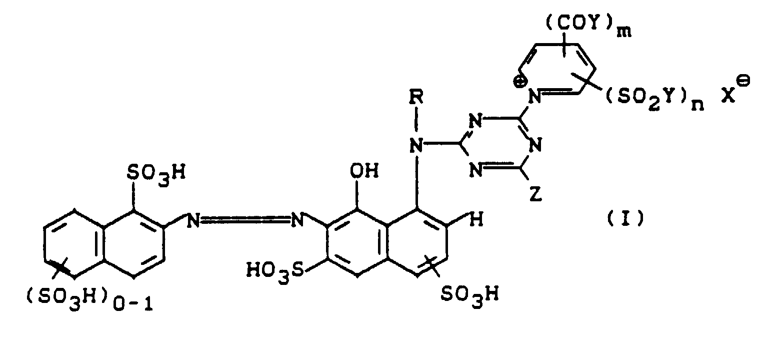 worin
R H oder C₁-C₆-Alkyl, wobei die Alkylgruppen unsubstituiert oder durch OH, Halogen, SO₃H oder OSO₃H substituiert sind,
Z = heterocyclischer gesättigter stickstoffhaltiger Fünf- oder Sechsring, der weitere Heteroatome, wie N,O,S oder SO₂, enthalten kann und der über das N-Atom an den Triazinring gebunden ist, insbesondere ein Heterocyclus mit wenigstens zwei Heteroatomen als Ringglieder
n, m = 0, 1 oder 2, wobei m + n = 0,1 oder 2
Y = OH, OR, NR₂R₃, OMe,
R₃, R₂ = H, R,
wobei R₂ und R₃ zusammen mit dem N-Atom einen heterocyclischen 5- oder 6-Ring bilden können,
Me = Alkali- oder Erdalkalimetall, insbesondere Li, Na, K,
X⁻ = Anion einer ein- oder mehrbasigen organischen oder anorganischen Säure.

2. Farbstoffe nach Anspruch 1, worin Z bedeutet 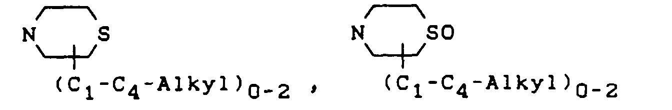 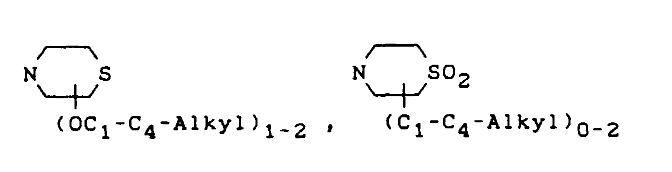 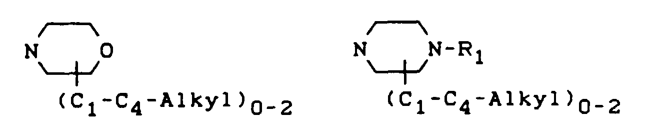 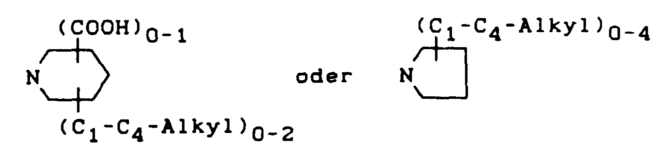 worin
R₁ = H oder gegebenenfalls durch wasserlöslich machende Substituenten substituiertes C₁-C₆-Alkyl.

3. Azofarbstoffe gemäß Anspruch 1 der Formel 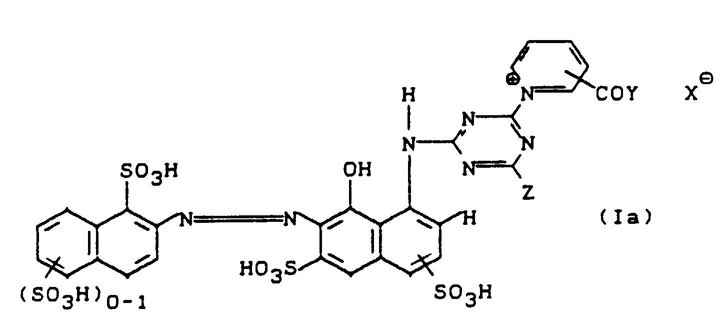 worin die Substituenten die in Anspruch 1 angegebene Bedeutung haben.

4. Azofarbstoffe gemäß Anspruch 1 der Formel 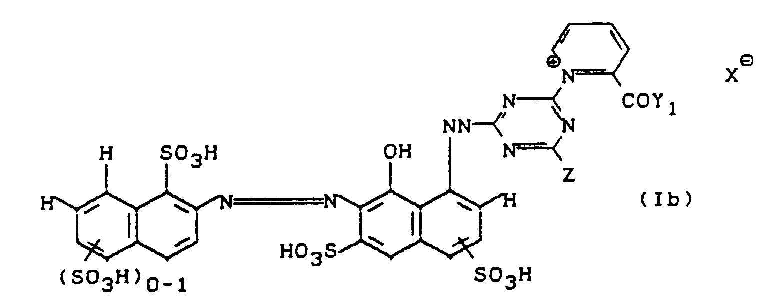 worin
Z = 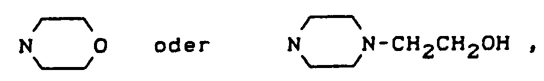
Y₁ = OH oder oder NH₂,
X⁻ = Anion einer ein- oder mehrbasigen organischen oder anorganischen Säure.

5. Farbstoffe gemäß Anspruch 1 der Formeln 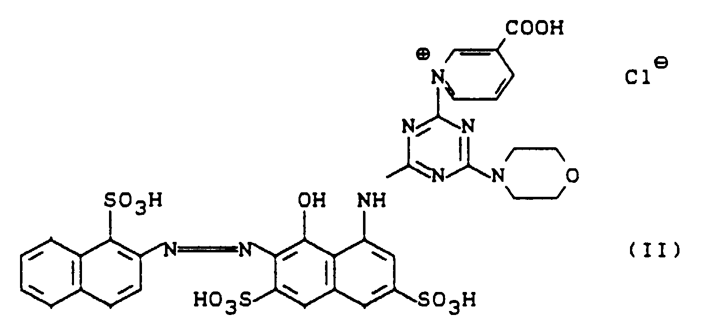 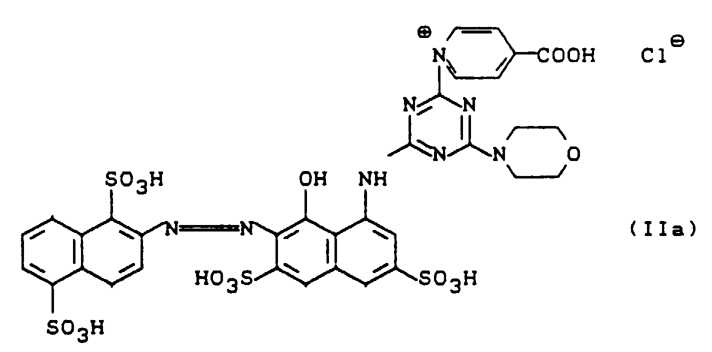 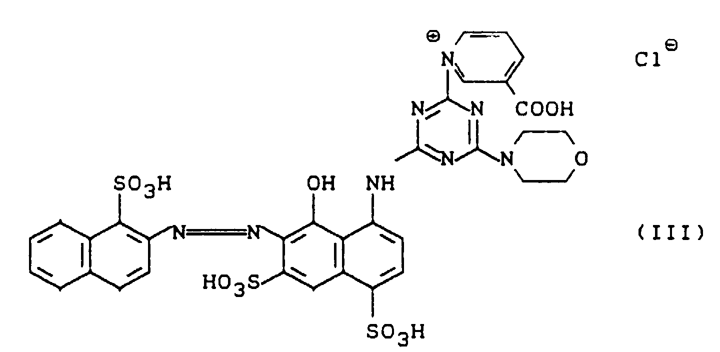 und

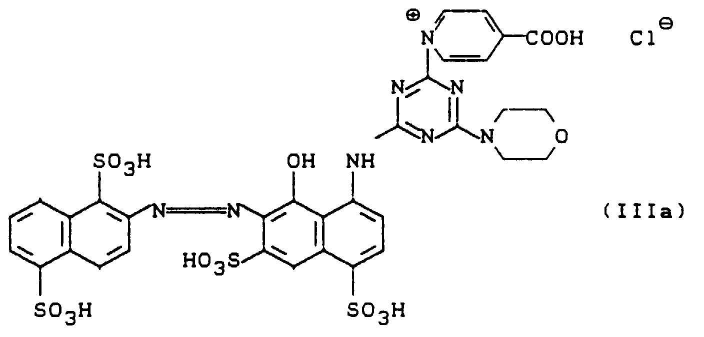

6. Verfahren zur Herstellung von Farbstoffen gemäß wenigstens einem der vorhergehenden Ansprüche durch
1. Kondensation der Aminonaphtholdisulfonsäure mit Trifluortriazin oder Trichlortriazin (= Reaktionsprodukt A)
2. Kondensation der Difluortriazinylaminonaphtholdisulfonsäure oder Dichlortriazinylaminonaphthalindisulfonsäure mit dem Amin H-Z (= Reaktionsprodukt B)
3. Diazotierung der Diazokomponente und Kupplung mit Reaktionsprodukt B
4. Umsetzung des Reaktionsproduktes B
in Gegenwart säurebindender Mittel mit einer Verbindung der Formel 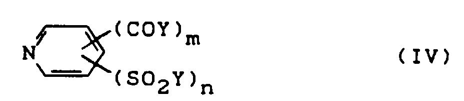 oder durch Vertauschen der Reaktionsstufen 2 und 3.

7. Verfahren zum Färben von Substanzen, dadurch gekennzeichnet, daß man Farbstoffe gemäß wenigstens einem der vorhergehenden Ansprüche verwendet.

## Claims

1. Fibre-reactive azo dyestuffs, which in the form of the free acid have the following formula 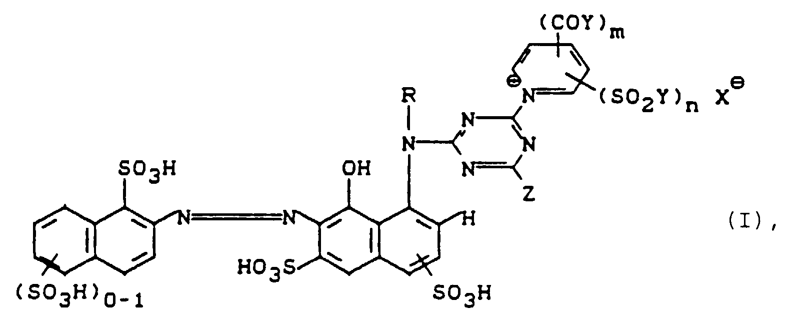 in which
R = H or C₁-C₆-alkyl, in which the alkyl groups are unsubstituted or substituted by OH, halogen, SO₃H or OSO₃H,
Z = a heterocyclic saturated nitrogen-containing five- or six-membered ring, which may contain further hetero atoms, such as N, O, S or SO₂, and is bound to the triazine ring via the N atom, in particular a heterocycle having at least two hetero atoms as ring members
n, m = 0, 1 or 2, where m + n = 0, 1 or 2
Y = OH, OR, NR₂R₃, OMe,
R₃, R₂ = H, R, it being possible for R₂ and R₃ together with the N atom to form a heterocyclic 5- or 6-membered ring,
Me = alkali metal or alkaline earth metal, in particular Li, Na, K,
X⁻ = anion of a mono- or polybasic organic or inorganic acid.

2. Dyestuffs according to Claim 1, in which Z denotes 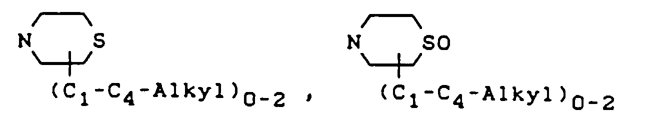 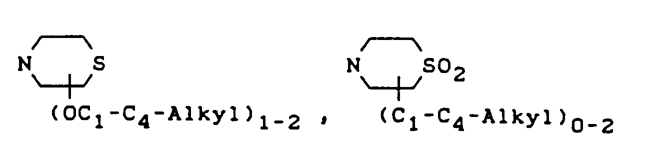 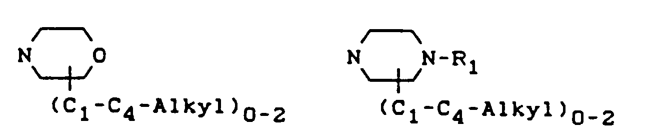 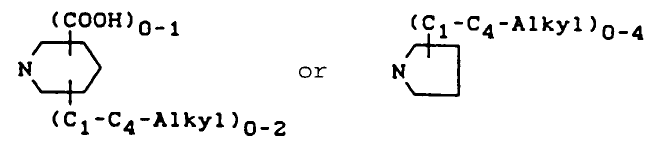 in which
R₁ = H or C₁-C₆-alkyl which is unsubstituted or substituted by water-solubilising substituents.

3. Azo dyestuffs according to Claim 1 of the formula 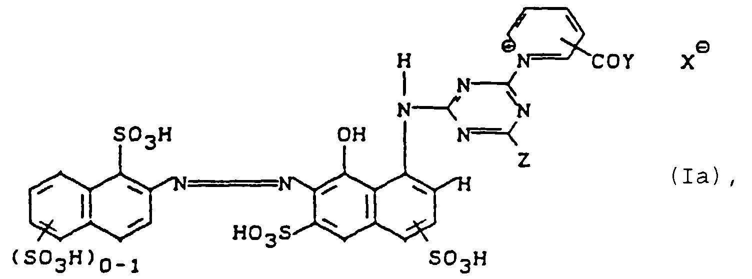 in which the substituents have the meaning given in Claim 1.

4. Azo dyestuffs according to Claim 1 of the formula 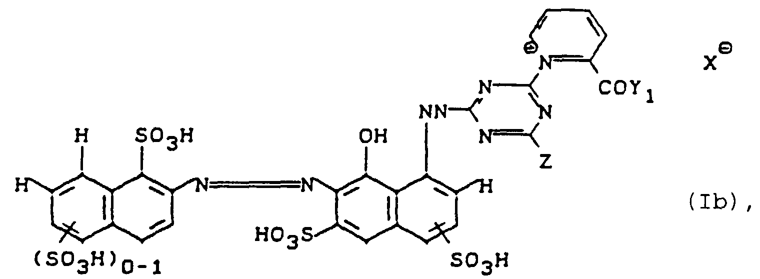 in which
Z = 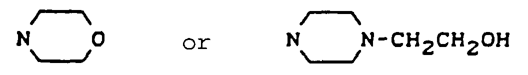
Y₁ = OH or NH₂,
X⁻ = anion of a mono- or polybasic organic or inorganic acid.

5. Dyestuffs according to Claim 1 of the formulae 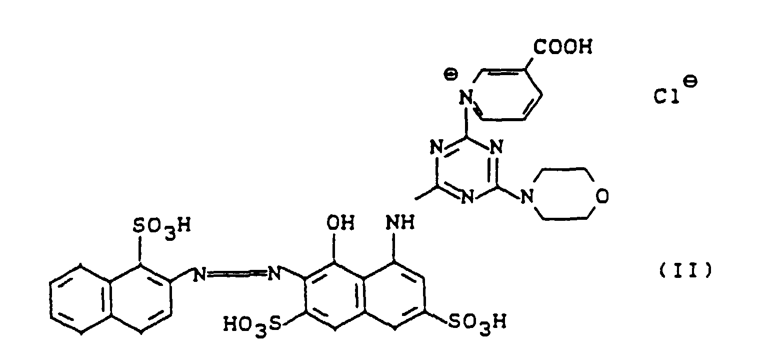 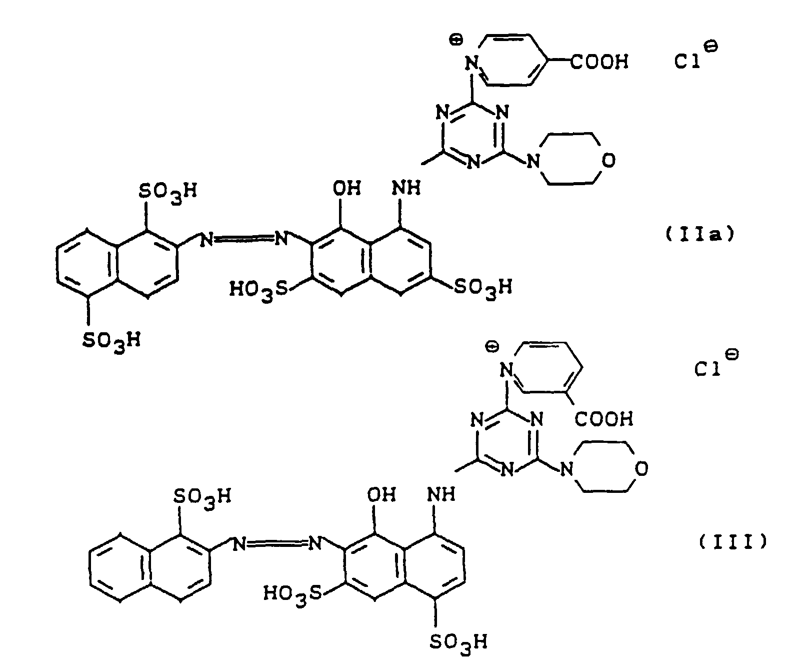 and

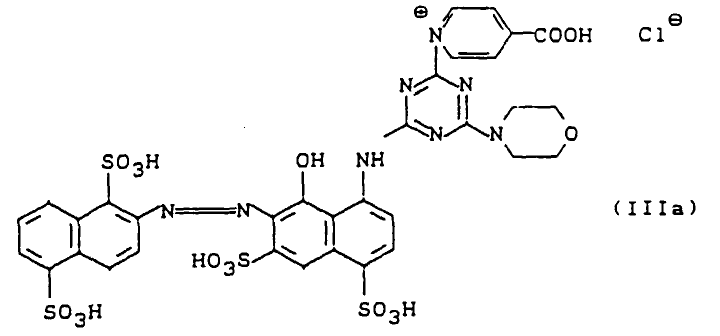

6. Process for the preparation of dyestuffs according to at least one of the preceding claims by
1. condensation of aminonaphtholdisulphonic acid with trifluorotriazine or trichlorotriazine (= reaction product A)
2. condensation of difluorotriazinylaminonaphtholdisulphonic acid or dichlorotriazinylaminonaphthalenedisulphonic acid with the amine H-Z (= reaction product B)
3. diazotisation of the diazo component and coupling onto reaction product B
4. reaction of reaction product B in the presence of acid-binding agents with a compound of the formula 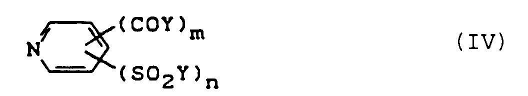 or by interchanging reaction steps 2 and 3.

7. Process for the dyeing of substances, characterised in that dyestuffs according to at least one of the preceding claims are used.

## Revendications

1. Colorants azoïques réactifs avec les fibres qui, sous forme de l'acide libre, correspondent à la formule suivante 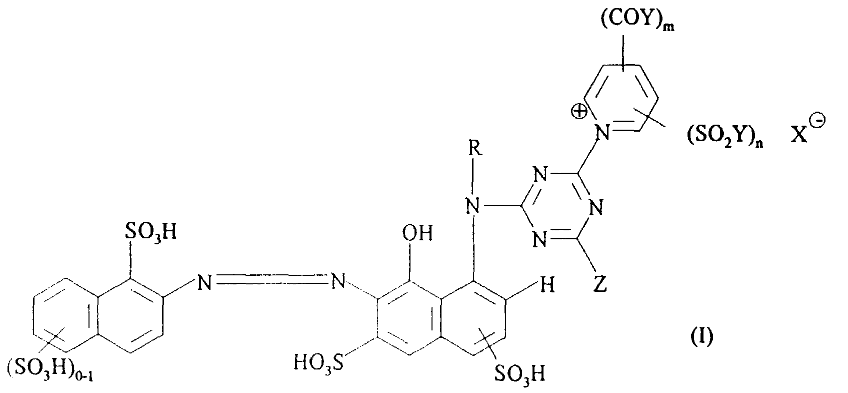 où
R = H ou alkyle en C₁-C₆, où les groupes alkyles sont non substitués ou sont substitués par OH, halogène, SO₃H ou OSO₃H,
Z = cycle azoté saturé hétérocyclique à 5 ou 6 chaînons, qui peut contenir d'autres hétéroatomes comme N, O, S ou SO₂ et qui est lié au cycle triazine par l'intermédiaire de l'atome d'azote, en particulier un hétérocycle ayant au moins deux hétéroatomes comme éléments cycliques,
n, m = 0, 1 ou 2, où m + n = 0, 1 ou 2
Y = OH, OR, NR₂R₃, OMe,
R₃, R₂ = H, R,
où R₂ et R₃ peuvent former avec l'atome d'azote un cycle hétérocyclique à 5 ou 6 chaînons,
Me = métal alcalin ou alcalino-terreux, en particulier Li, Na, K,
X⁻ = anion d'un acide organique ou inorganique mono- ou polyfonctionnel.

2. Colorants selon la revendication 1 où Z signifie 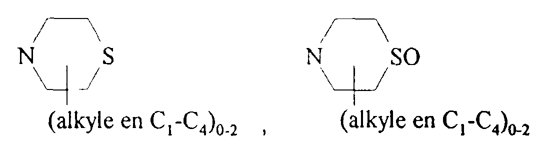 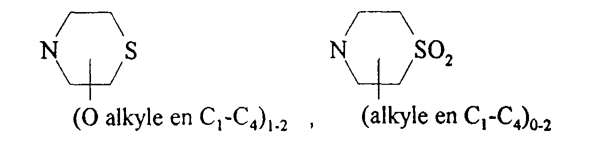 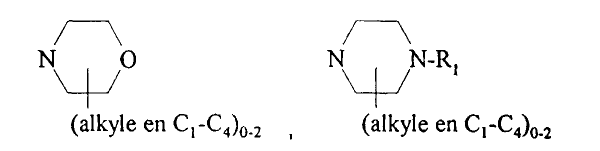 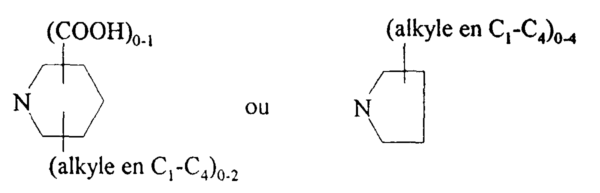 où
R₁ = H ou alkyle en C₁-C₆ éventuellement substitué par des substituants hydro-solubilisants.

3. Colorants azoïques selon la revendication 1 de formule 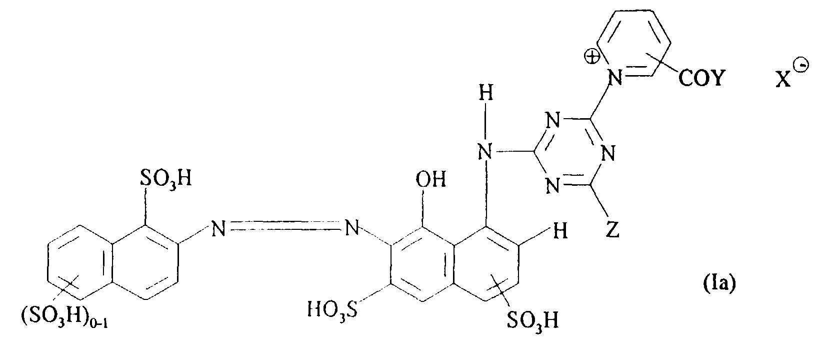 où les substituants ont la signification indiquée dans la revendication 1.

4. Colorants azoïques selon la revendication 1 de formule 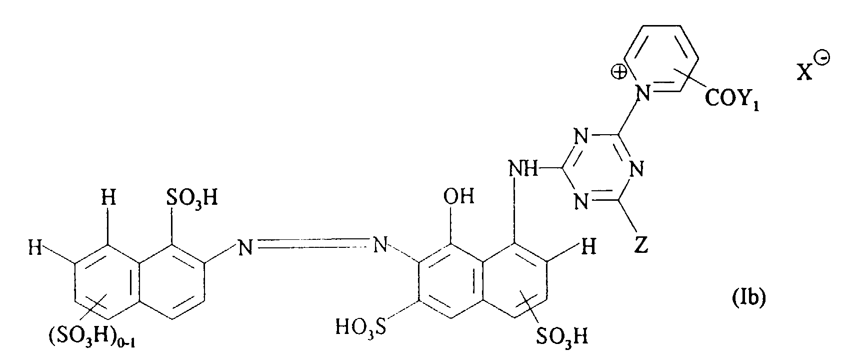 où 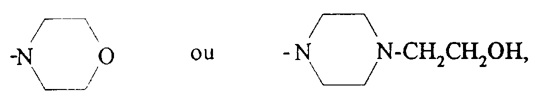
Y₁ = OH ou NH₂,
X⁻ = anion d'un acide organique ou inorganique mono- ou polyfonctionnel.

5. Colorants selon la revendication 1 des formules

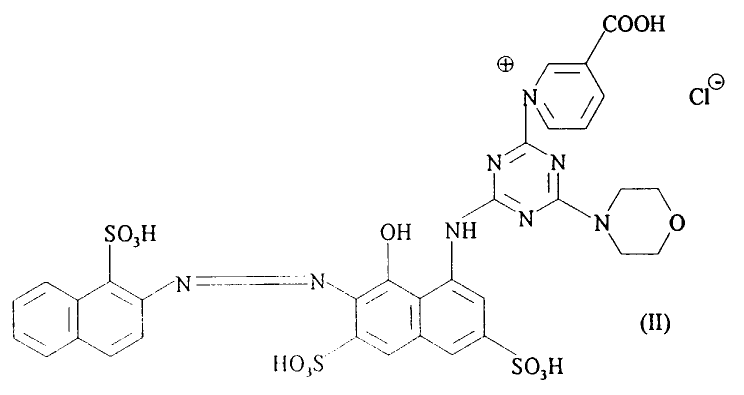

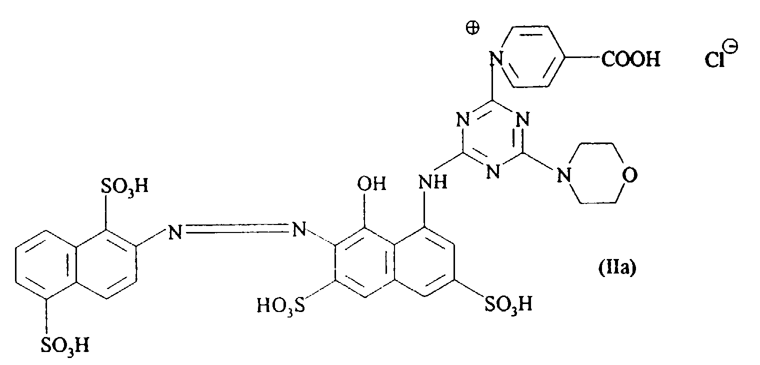

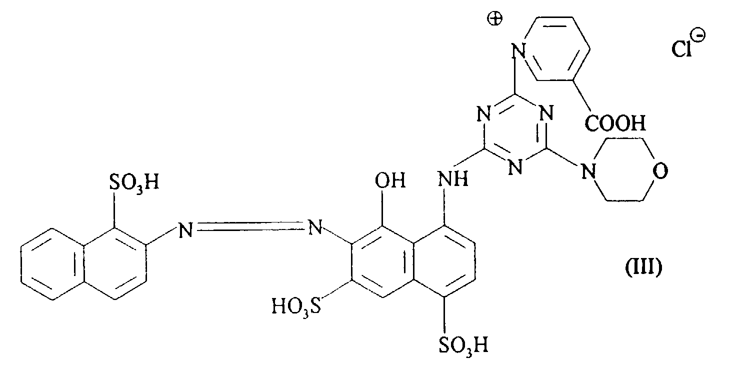

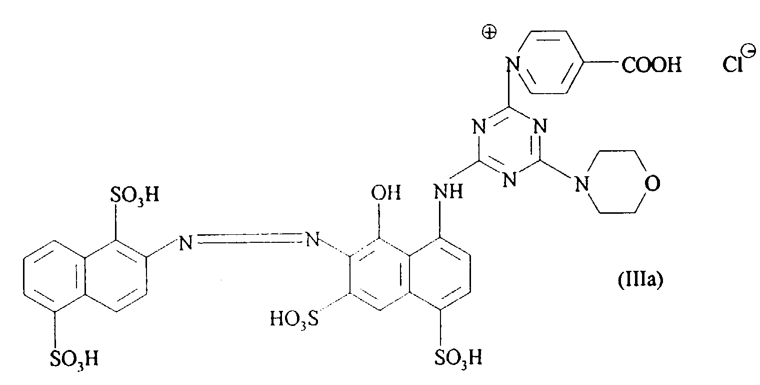

6. Procédé de préparation de colorants selon au moins l'une des revendications précédentes par
1. condensation de l'acide aminonaphtoldisulfonique avec la trifluorotriazine ou la trichlorotriazine (= produit réactionnel A)
2. condensation de l'acide difluorotriazinylaminonaphtoldisulfonique ou de l'acide dichlorotriazinylaminonaphtalènedisulfonique avec l'amine H-Z (= produit réactionnel B)
3. diazotation du composant diazoïque et couplage avec le produit réactionnel B
4. réaction du produit réactionnel B
en présence d'un agent fixant les acides avec un composé de formule 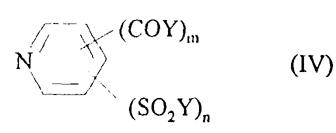 ou par permutation des étapes réactionnelles 2 et 3.

7. Procédé pour teindre des substances, caractérisé en ce que l'on utilise des colorants selon au moins l'une des revendications précédentes.
